# EUROPÄISCHE PATENTANMELDUNG

(11) **EP 0 875 716 A2**
(43) Veröffentlichungstag der Anmeldung: **04.11.1998**
(21) Anmeldenummer: 98107775.3
(22) Anmeldetag: 29.04.1998
(51) Int. Cl.: F23C 6/04, F23C 3/00, F23D 14/62, F23L 15/04

(54) **Verfahren und Vorrichtung zur mehrstufigen Verbrennung von Brennstoff**

(30) Priorität: 03.05.1997 DE 19718878
(71) Anmelder: Kromschröder Prozesswärme GmbH, 42389 Wuppertal (DE)
(72) Erfinder: Freieck, Paul, Dipl.-Ing., 42389 Wuppertal (DE)
(74) Vertreter: Harlacher, Mechthild

(57) **Zusammenfassung**

Die Verbrennung findet in einem geschlossenen Raum, vorzugsweise in einem Strahlheizrohr statt. Dabei bildet eine Brennkammer (1) eine Primärzone, die mit einem intensiv verwirbelten, homogenen Gemisch aus Brennstoff und vorgewärmter Primärluft beschickt und auf λ = 0,5 bis 0,7 eingestellt wird. Hieran schließt sich eine Sekundärzone an, die bei λ = 0,95 arbeitet. Die Ausreaktion des Brennstoffs erfolgt in einer Tertiärzone, die von einem Abgaskanal (10) eines Rekuperators (8) gebildet wird. Die Verbrennung ist vollständig und NOₓ-arm, wobei während des Zündens keine Zündstöße auftreten.

## Beschreibung

Die Erfindung betrifft ein Verfahren und eine Vorrichtung zur mehrstufigen Verbrennung von Brennstoff mit vorgewärmter Verbrennungsluft in einem geschlossenem Raum, vorzugsweise in einem Strahlheizrohr.

Aus Umweltschutzgründen ist man heutzutage bestrebt, die CO₂-Emissionen zu vermindern. Dies bedeutet eine Verminderung des Brennstoffbedarfs, wozu eine Erhöhung des Verbrennungswirkungsgrades erforderlich ist. Eine der hierfür bekannten Maßnahmen, die insbesondere in der Hochtemperatur-Verbrennungstechnik Anwendung findet, ist die Nutzbarmachung der im Abgas enthaltenen Wärme zur Vorwärmung der Verbrennungsluft. Dadurch erhöht sich die Flammentemperatur, wodurch wiederum die NOₓ-Emissionen ansteigen.

Um diesem Effekt entgegenzuwirken, kann mit zweistufiger Verbrennung gearbeitet werden. In der ersten Stufe wird die Verbrennung unterstöchiometrisch betrieben, so daß die in der zweiten Stufe erfolgende überstöchiometrische Verbrennung auf relativ niedrigem Temperaturniveau startet. Dennoch sind die NOₓ-Emissionen nicht immer zufriedenstellend, insbesondere wenn es sich um Hochtemperaturverfahren handelt, bei denen die Verbrennungsluft stark vorgewärmt wird, vorzugsweise auf mehr als 300°C.

Der Erfindung liegt daher die Aufgabe zugrunde, die NOₓ-Emmisionen zu senken.

Zur Lösung dieser Aufgabe ist das eingangs genannte Verfahren erfindungsgemäß dadurch gekennzeichnet,
- daß der Brennstoff mit Primärluft zu λ = 0,5 bis 0,7 vorgemischt, sodann einer Primärstufe zugeführt und dort zur Reaktion gebracht wird und
- daß die Reaktionsprodukte der Primärstufe in mindestens einer weiteren Stufe mit weiterer vorgewärmter Verbrennungsluft zu insgesamt λ > 1 gemischt und ausreagiert werden.

Der Erfindung liegt die Erkenntnis zugrunde, daß die Mischung des Brennstoffs mit der Primärluft direkt in der Primärstufe kurzzeitig Zonen entstehen läßt, in denen überstöchiometrische Verhältnisse vorliegen und in denen es daher zu einer erhöhten NOₓ-Bildung kommt, und zwar um so stärker, je größer der Mischimpuls ist. Derartige Verhältnisse können bei dem Verfahren nach der Erfindung nicht auftreten, da die Primärstufe bereits mit einem sehr sorgfältig und intensiv verwirbelten homogenen Gemisch beschickt wird. Temperaturspitzen, wie sie für die NOₓ-Bildung verantwortlich sind, können also nicht auftreten.

In wesentlicher Weiterbildung der Erfindung wird vorgeschlagen, daß die Reaktionsprodukte der Primärstufe in einer Sekundärstufe mit Sekundärluft zu etwa λ = 0,95 gemischt und die Reaktionsprodukte der Sekundärstufe in einer Tertiärstufe mit Tertiärluft zu λ > 1 gemischt werden.

Im Anschluß an die Primärstufe erfolgt also die Beimischung der Sekundärluft, wobei das Gemisch nach wie vor unterstöchiometrisch bleibt. In diesem sauerstofffreien Rauchgas kann sich kein NOₓ bilden. Vielmehr wird NOₓ abgebaut. Die theoretische Rauchgastemperatur bei 5 % Luftmangel liegt unwesentlich höher als die bei 5 % Luftüberschuß. Die leicht reduzierende Rauchgasatmosphäre wirkt sich nicht nachteilig auf die in der Sekundärstufe erfolgende Wärmeabgabe aus.

In der Tertiärstufe verbindet sich der Sauerstoff der Tertiärluft oberhalb der Zündtemperatur mit den noch unverbrannten Brennstoffresten der aus der Sekundärstufe stammenden Reaktionsprodukte. Wasserstoff und Kohlenmonoxid werden zu Wasser und Kohlendioxid umgesetzt. Dabei findet keine wesentliche Temperaturerhöhung statt, weil die entstehende restliche Verbrennungswärme ungefähr diejenige Wärmemenge liefert, die erforderlich ist, um die vorgewärmte Tertiärluft auf ungefähr 1100°C zu erwärmen.

Die Vormischung des Brennstoffs mit der Primärluft vor Eintritt in die Primärstufe findet unterhalb der Zündtemperatur statt. Beim Starten muß der Brenner also gezündet werden. Dabei zeigt sich überraschenderweise, daß keinerlei Zündstöße auftreten, wie sie sonst im geschlossenen Raum zu beobachten sind. Dies dürfte darauf zurückzuführen sein, daß sich aufgrund der intensiven homogenen Vormischung eine sehr weiche Flammenbildung ergibt.

Bei unterstöchiometrischer Fahrweise der Primär- und Sekundärstufe besteht während des Startvorgangs die Gefahr, daß die Reaktionsprodukte der Sekundärstufe unterhalb der Zündtemperatur der Tertiärstufe liegen. Dies würde dazu führen, daß die CO-Emissionen unzulässig ansteigen. Um dieser Gefahr entgegenzuwirken, wird vorgeschlagen, die Primär- und Sekundärstufen beim Startvorgang überstöchiometrisch zu betreiben.

Vorzugsweise beträgt die Tertiärluft etwa 10% der gesamten Verbrennungsluft. Dies hat sich aus verbrennungstechnischen und aus wirtschaftlichen Gründen als günstig erwiesen.

Ferner wird vorgeschlagen, die Verbrennungsluft für die der Primärstufe nachgeschalteten Stufen auf 600 bis 800°C vorzuwärmen. Der Grad der Vorwärmung hängt von der Ofentemperatur und der Brennergröße ab.

Ein weiteres vorteilhaftes Merkmal besteht darin, Abgas in die Sekundärstufe zu rezirkulieren. Das Abgas trägt zur Verdünnung der Sekundärluft bei und zieht daher den Verbrennungsvorgang in dieser Stufe auseinander. Die einzelnen Brennstoffmoleküle müssen weite Wege zurücklegen, bis sie auf Sauerstoffmoleküle stoßen.

Die Erfindung schafft ferner einen Heißluftbrenner für einen geschlossenen Raum, insbesondere für ein Strahlheizrohr, mit einer Brennkammer, die eine Primärzone bildet und mit Einrichtungen zum Zuführen von Brennstoff und vorgewärmter Verbrennungsluft versehen ist, wobei dieser Brenner zur Lösung der gestellten Aufgabe dadurch gekennzeichnet ist, daß die Einrichtungen zum Zuführen von Brennstoff und vorgewärmter Verbrennungsluft zur Brennkammer als Vormischeinrichtung ausgebildet sind, die die Brennkammer mit einem homogenen Gemisch beschickt.

Die Vormischeinrichtung weist vorzugsweise ein in einer Luftführung angeordnetes Mischrohr auf, vor dessen Einlaß eine Gasdüse angeordnet ist. Derartige Mischeinrichtungen haben sich bei atmosphärischen Vormischbrennern bewährt. Die Mischwirkung ist sehr intensiv, so daß die scharfen Abgrenzungen zwischen Brenngas und Luft im wesentlichen eliminiert werden. Bei dem für einen geschlossenen Raum vorgesehenen Brenner ergibt sich ferner der vorteilhafte Effekt, daß das Mischrohr neben der oben erwähnten weichen Flammenbildung dazu beiträgt, Zündstöße zu elimieren. Die beim Zündvorgang auftretende Volumenvergrößerung und die damit im geschlossenen Raum verbundene Druckwelle wirken sich nämlich an beiden Öffnungen des Mischrohres aus und bleiben daher ohne Einfluß.

Nach einem weiteren vorteilhaften Merkmal bildet die Luftführung die Innenwand eines Rekuperators, der einen innen liegenden Luftkanal und einen außen liegenden Abgaskanal aufweist. Im Rekuperator erfolgt die Vorwärmung der Verbrennungsluft, wobei es ganz besonders vorteilhaft ist, die Luftführung mit stromauf gelegenen Lufteintrittsöffnungen zu versehen. Würde, wie es durchaus auch möglich ist, die Luftführung, d.h., die Vormischeinrichtung, mit der im Rekuperator vorgewärmten Verbrennungsluft beaufschlagt, so müßte die Luftvorwärmung auf einen Wert begrenzt werden, der unterhalb der Zündtemperatur des Brennsstoffs liegt. Da die stromauf gelegenen Lufteintrittsöffnungen vor dem Rekuperator bzw. im Eintrittsbereich des Luftkanals des Rekuperators abzweigen, wird die Luftführung und damit die Vormischeinrichtung mit Verbrennungsluft beschickt, die lediglich moderat vorgewärmt ist, beispielsweise auf ca. 200°C. Im Rekuperator kann dann das volle Wärmepotential der Abgase ausgeschöpft werden.

Ferner wird vorgeschlagen, daß eine zwischen dem Luftkanal und dem Abgaskanal des Rekuperators liegende wärmeübertragende Wand Luftübertrittsöffnungen auf der Höhe des Einlasses des Abgaskanals aufweist. Diese Luftübertrittsöffnungen liefern die Tertiärluft für die Tertiärstufe der Verbrennung, wobei letztere im Abgaskanal des Rekuperators stattfindet. Insgesamt ergibt sich auf diese Weise eine kompakte und wirtschaftliche Bauform des Brenners.

Dies gilt insbesondere dann, wenn, wie es ferner vorgeschlagen wird, die Luftführung einteilig in die Brennkammer übergeht, und zwar vorzugsweise mit konstantem Durchmesser. Die Luftführung bildet also ein zentrales Rohr, an dessen Ende die Brennkammer angeordnet ist, wobei letztere vorzugsweise als Impulsbrennkammer ausgebildet ist.

Ferner wird in Weiterbildung der Erfindung vorgeschlagen, daß sich an die Brennkammer auslaßseitig ein Innenrohr eines Strahlheizrohres anschließt und daß die Luftführung und/oder der Luftkanal des Rekuperators mindestens eine Auslaßöffnung aufweist, die vor dem Einlaß des Innenrohres angeordnet ist. Primär- und Sekundärluft stammen also aus ein und derselben Luftquelle. Da das Innenrohr des Strahlheizrohres mit Abstand hinter dem Auslaß der Brennkammer liegt, kann an dieser Stelle Abgas in das Innenrohr, also in die sekundäre Verbrennungsstufe rezirkuliert werden.

Die Erfindung wird im folgenden anhand bevorzugter Ausführungsbeispiele im Zusammenhang mit der beiliegenden Zeichnung näher erläutert. Die Zeichnung zeigt in:
- Fig. 1: einen Axialschnitt durch einen Heißluftbrenner;
- Fig. 2: einen Axialschnitt durch ein Strahlheizrohr.

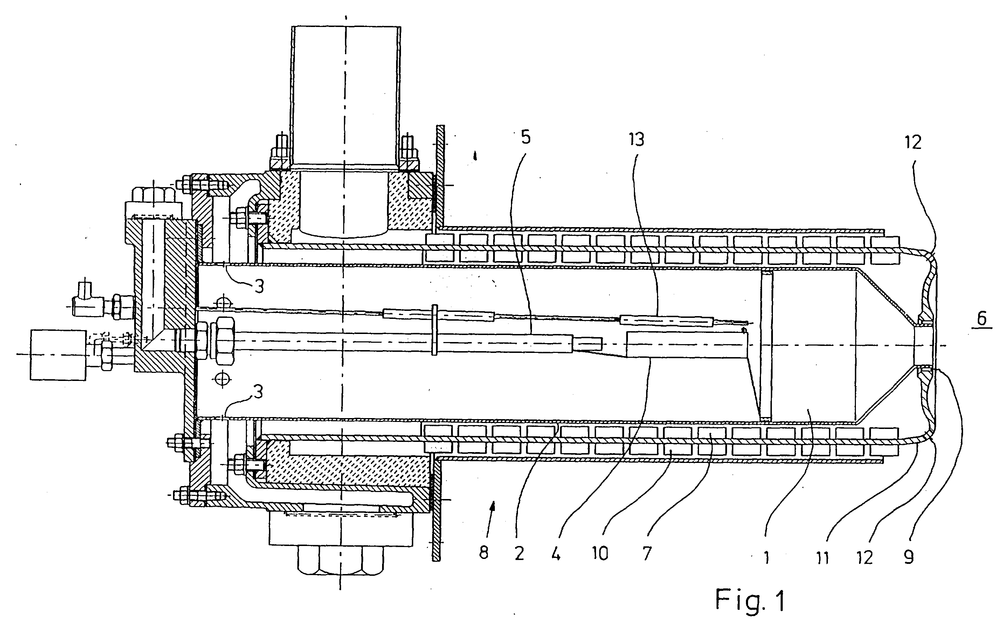

Der Heißluftbrenner nach Fig. 1 weist eine Brennkammer 1 auf die in einer Luftführung 2 angeordnet ist. Die Luftführung 2 wird mit leicht vorgewärmter Verbrennungsluft beaufschlagt, und zwar über Lufteintrittsöffnungen 3.

Innerhalb der Luftführung 2 ist ein Mischrohr 4 vorgesehen, dem einlaßseitig eine Gasdüse 5 zugeordnet ist. Die Brennkammer 1, die eine Primärzone bildet, wird also mit einem sehr intensiv verwirbelten homogenen Gemisch aus Brennstoff und Primärluft beaufschlagt. Dieses homogene Gemisch ist auf λ = 0,5 bis 0,7 eingestellt und bewirkt eine NOₓ-arme Verbrennung in der Primärzone.

Die aus der Brennkammer 1 austretenden Reaktionsprodukte gelangen in eine in dem geschlossenen Raum liegende Sekundärzone 6. Die erforderliche Sekundärluft stammt aus einem Luftkanal 7 eines Rekuperators 8 und tritt aus einer Öffnung 9 aus, die den Auslaß der Brennkammer 1 umgibt. Die Sekundärzone arbeitet mit λ = 0,95.

Die Reaktionsprodukte der Sekundärzone treten in einen Abgaskanal 10 ein, der einen Teil des Rekuperators 8 bildet und den Luftkanal 7 umgibt. Am Eintrittsende des Abgaskanals 10 ist eine wärmeübertragende Wand 11 des Rekuperators 8 mit einer Mehrzahl von ringförmig angeordneten Luftübertrittsöffnungen 12 versehen, durch die ca. 10 % der gesamten Verbrennungsluft als Tertiärluft in den Abgaskanal 10 eingeleitet werden. Hier bildet sich eine Tertiärzone, in der die Ausoxidation des Brennstoffs erfolgt. Eine Temperaturerhöhung ergibt sich dabei praktisch nicht, da die entstehende Verbrennungswärme im wesentlichen dazu dient, die vorgewärmte Verbrennungsluft von ihrer Vorwärmtemperatur von ca. 600°C auf die Abgastemperatur von ca. 1100°C zu bringen.

Während des Startvorganges gibt es eine Anfangsphase, in der die Ofentemperatur unter 600°C liegt. Sodann liegt die Temperatur am Einlaß der Tertiärzone unterhalb der Zündtemperatur. Dies führt zwangsläufig zu einem unzulässigen Anstieg der CO-Emissionen. In diesem Bereich wird daher der Brenner mit einer Starteinstellung gefahren, bei der die Primär- und die Sekundärzone überstöchiometrisch arbeiten (Erhöhung des Luftdrucks oder Absenkung des Gasdrucks).

Der Brenner wird durch Betätigung einer Zündeinrichtung 13 gestartet. Aufgrund der guten homogenen Durchmischung des Gemischs für die Primärzone ergibt sich eine weiche Flamme. Hinzu kommt, daß die durch die Zündung im geschlossenen Raum entstehende Druckwelle gleichzeitig auf beide Enden des Mischrohres 4 einwirkt und sich dementsprechend aufhebt. Die Folge ist, daß die sonst in geschlossenen Räumen zu beobachtenen Zündstöße nicht auftreten.

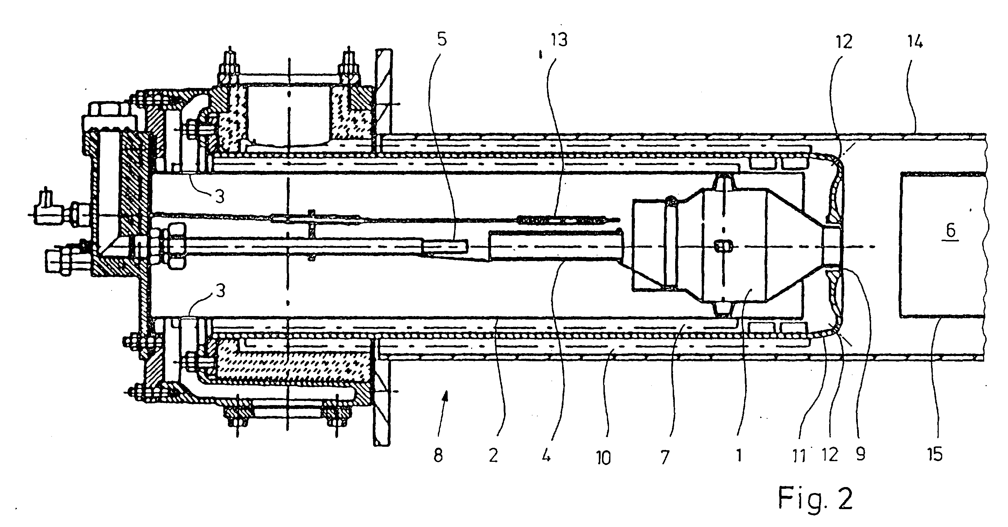

Fig. 2 zeigt die Anwendung der Erfindung auf ein Mantelstrahlheizrohr. Hier ist die Außenwand des Rekuperators 8 als Mantelrohr 14 fortgeführt, in welchem sich ein Innenrohr 15 befindet. Letzteres bildet die Sekundärzone 6. Die Abgase strömen durch den Ringraum zwischen dem Mantelrohr 14 und den Innenrohr 15 zurück, wobei ein Teil direkt in den Abgaskanal 10 des Rekuperators 8 gelangt, während ein anderer Teil in das Innenrohr 15 rezirkuliert wird. Dies trägt zur Verdünnung der Sekundärluft bei, wodurch die Verbrennung in der Sekundärzone auseinander gezogen wird.

Auch hier arbeitet die Sekundärzone mit λ = 0,95, wodurch sich günstige Verhältnisse für die Wärmeabgabe über das Innenrohr 15 ergeben.

Im übrigen unterscheidet sich die Ausführungsform nach Fig. 2 von der nach Fig. 1 noch dadurch, daß die Brennkammer 1 nicht einteilig mit der Luftführung 2 ausgebildet, sondern mit Abstand in letzterer angeordnet ist. Der Luftkanal 7 des Rekuperators 8 steht also auch am stromab gelegenen Ende mit dem Innenraum der Luftführung 2 in Verbindung. Die Beaufschlagung des Mischrohres 4 mit Verbrennungsluft erfolgt allerdings weitgehend über die Lufteintrittsöffnungen 3, und zwar derart, daß in der Luftführung 2 die Zündtemperatur des Brennstoffs nicht überschritten wird.

Im Rahmen der Erfindung sind durchaus Abwandlungsmöglichkeiten gegeben. So besteht die Möglichkeit, nicht die gesamte Primärluft durch das Mischrohr zu fördern, sondern einen Teil direkt in den Einlaß der Brennkammer einzuleiten. Wesentlich ist, daß keine Zonen mit unzulässigen Temperaturspitzen in der Primärstufe auftreten. Ferner besteht die Möglichkeit, das Innenrohr des Strahlheizrohres direkt mit der wärmeübertragenden Wand des Rekuperators zu verbinden und im Eintrittsbereich gegebenenfalls mit zusätzlichen Abgas-Durchtrittsöffnungen zu versehen. Schließlich sei hervorgehoben, daß eine Arbeitsweise ohne Tertiärzone möglich ist, wobei dann das Ausoxidieren des Brennstoffs in der Sekundärzone stattfindet. Allerdings spielt auch bei dieser Abwandlungsform die homogene Vormischung vor Eintritt in die Primärzone eine wesentliche Rolle.

## Patentansprüche

1. Verfahren zur mehrstufigen Verbrennung von Brennstoff mit vorgewärmter Verbrennungsluft in einem geschlossenen Raum, vorzugsweise in einem Strahlheizrohr,
**dadurch gekennzeichnet,**
- daß der Brennstoff mit Primärluft zu λ = 0,5 bis 0,7 homogen vorgemischt, sodann einer Primärstufe zugeführt und dort zur Reaktion gebracht wird und
- daß die Reaktionsprodukte der Primärstufe in mindestens einer weiteren Stufe mit weiterer vorgewärmter Verbrennungsluft zu insgesamt λ > 1 gemischt und ausreagiert werden.

2. Verfahren nach Anspruch 1, dadurch gekennzeichnet, daß die Reaktionsprodukte der Primärstufe in einer Sekundärstufe mit Sekundärluft zu etwa λ = 0,95 gemischt und die Reaktionsprodukte der Sekundärstufe in einer Tertiärstufe mit Tertiärluft zu λ > 1 gemischt werden.

3. Verfahren nach Anspruch 2, dadurch gekennzeichnet, daß die Primär- und Sekundärstufen beim Startvorgang überstöchiometrisch betrieben werden.

4. Verfahren nach Anspruch 2 oder 3, dadurch gekennzeichnet, daß die Tertiärluft etwa 10 % der gesamten Verbrennungsluft beträgt.

5. Verfahren nach einem der Ansprüche 1 bis 4, dadurch gekennzeichnet, daß die Verbrennungsluft für die der Primärstufe nachgeschalteten Stufen auf 600 bis 800°C vorgewärmt wird.

6. Verfahren nach einem der Ansprüche 1 bis 5, dadurch gekennzeichnet, daß Abgas in die Sekundärstufe rezirkuliert wird.

7. Heißluftbrenner für einen geschlossenen Raum, insbesondere für ein Strahlheizrohr, mit einer Brennkammer, die eine Primärzone bildet und mit Einrichtungen zum Zuführen von Brennstoff und vorgewärmter Verbrennungsluft versehen ist,
**dadurch gekennzeichnet,**
daß die Einrichtungen zum Zuführen von Brennstoff und vorgewärmter Verbrennungsluft zur Brennkammer (1) als Vormischeinrichtung ausgebildet sind.

8. Brenner nach Anspruch 7, dadurch gekennzeichnet, daß die Vormischeinrichtung ein in einer Luftführung (2) angeordnetes Mischrohr (4) aufweist, vor dessen Einlaß eine Gasdüse (5) angeordnet ist.

9. Brenner nach Anspruch 8, dadurch gekennzeichnet, daß die Luftführung (2) die Innenwand eines Rekuperators (8) bildet, der einen innen liegenden Luftkanal (7) und einen außen liegenden Abgaskanal (10) aufweist.

10. Brenner nach Anspruch 9, dadurch gekennzeichnet, daß die Luftführung (2) stromauf gelegene Lufteintrittsöffnungen (3) aufweist.

11. Brenner nach Anspruch 9 oder 10, dadurch gekennzeichnet, daß eine zwischen dem Luftkanal (7) und dem Abgaskanal (10) des Rekuperators (8) liegende wärmeübertragende Wand (11) Luftübertrittsöffnungen (12) auf der Höhe des Einlasses des Abgaskanals (10) aufweist.

12. Brenner nach einem der Ansprüche 8 bis 11, dadurch gekennzeichnet, daß die Luftführung (2) einteilig in die Brennkammer (1) übergeht.

13. Brenner nach einem der Ansprüche 7 bis 12, dadurch gekennzeichnet, daß sich an die Brennkammer (1) auslaßseitig ein Innenrohr (15) eines Strahlheizrohres anschließt und daß die Luftführung (2) und/oder der Luftkanal (7) des Rekuperators (8) mindestens eine Auslaßöffnung (9) aufweist, die vor dem Einlaß des Innenrohres (15) angeordnet ist.
